# EUROPÄISCHE PATENTANMELDUNG

(11) **EP 2 196 630 A2**
(43) Veröffentlichungstag der Anmeldung: **16.06.2010**
(21) Anmeldenummer: 09013919.7
(22) Anmeldetag: 05.11.2009
(51) Int. Cl.: F01D 11/00, F01D 11/02, F01D 11/12

(54) **Labyrinthdichtungsring mit segmentierten Dichtlippen**

(30) Priorität: 11.12.2008 DE 102008061800
(71) Anmelder: Rolls-Royce Deutschland Ltd & Co KG, 15827 Blankenfelde-Mahlow (DE)
(72) Erfinder: Gäbler, Miklos, Dr., 14480 Potsdam (DE)
(74) Vertreter: Hager, Thomas Johannes

(57) **Zusammenfassung**

Die Erfindung bezieht sich auf einen Labyrinthdichtungsring für eine Labyrinthdichtung einer Turbinenscheibe 1 einer Gasturbine, mit einem metallischen Ringelement 3 mit zumindest einer ringförmigen Dichtlippe 4, **dadurch gekennzeichnet, dass** die Dichtlippe 4 an ihrem Umfang mit zumindest einer im Wesentlichen radial angeordneten Nut 5 versehen ist.

## Beschreibung

Die Erfindung bezieht sich auf einen Labyrinthdichtungsring gemäß dem Oberbegriff des Anspruches 1.

Im Einzelnen bezieht sich die Erfindung auf eine rissfeste Dichtlippe eines Labyrinthdichtungsringes zur Verwendung bei einer Labyrinthdichtung einer Turbinenscheibe einer Gasturbine, insbesondere einer Hochdruckgasturbine.

Aus dem Stand der Technik ist es bekannt, derartige Dichtungsringe aus Metall zu fertigen. Sie weisen zumindest eine ringförmige Dichtlippe auf, welche mit einem geringen Abstand gegen ein relativ zu dem Dichtungsring bewegtes Bauelement anliegt.

Dichtlippen an rotierenden Teilen werden mit engen Freispalttoleranzen zwischen den statischen und den rotierenden Teilen ausgelegt. Dies führt zu einer guten Dichtfunktion ohne größere Leckageraten.

In der Praxis, beispielsweise im üblichen Triebwerksbereich beim Anfahren und Abschalten eines Triebwerks, kommt es jedoch häufig vor, dass die Dichtlippe des Labyrinthdichtungsrings zumindest kurzzeitig das zugeordnete Bauteil, beispielsweise ein statisches Teil einer Statorscheibe berührt. Hieraus resultiert zunächst eine lokale Erhitzung der Dichtlippe. Diese wiederum führt zu Materialspannungen, welche wiederum zu Rissbildung und Rissfortschritt führen können.

Insbesondere bei Hochdruckturbinenscheiben führt dies zu einem erhöhten Versagensrisiko. Es ist somit unter Umständen erforderlich, die gesamte Turbinenscheibe zu ersetzen. Insbesondere bei einer Triebwerksüberholung einer Fluggasturbine stellt dies einen erheblichen finanziellen Aufwand dar.

Der Erfindung liegt die Aufgabe zugrunde, einen Labyrinthdichtungsring der eingangs genannten Art zu schaffen, welcher bei einfachem Aufbau und einfacher, kostengünstiger Herstellbarkeit die Nachteile des Standes der Technik vermeidet und eine hohe Lebensdauer bei geringer Rissanfälligkeit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Dichtlippe an ihrem Umfang mit zumindest einer im Wesentlichen radial angeordneten Nut versehen ist.

Durch die Einbringung einer Nut, welche bevorzugterweise eine sehr geringe Breite aufweist, beispielsweise zwischen 50 µm und 300 µm, werden thermische Spannungen abgebaut, die sich durch die Erwärmung der Dichtlippe beim Kontakt mit dem relativ hierzu bewegten Bauelement ergeben.

Erfindungsgemäß versteht sich, dass der Dichtungsring statisch oder drehend sein kann, die Erfindung ist insofern nicht auf einen Labyrinthdichtungsring beschränkt, welcher an einer Turbinenscheibe befestigt ist.

Durch die Möglichkeit, dass sich die Dichtlippe in Umfangsrichtung thermisch ausdehnen kann, wird somit die Rissbildungsgefahr ganz erheblich reduziert. In besonders günstiger Ausgestaltung der Erfindung ist vorgesehen, dass mehrere über den Umfang ausgebildete Nuten oder Schlitze vorgesehen sind. Die Herstellung der Nuten oder Schlitze kann durch eine Mikrobearbeitung erfolgen.

Weiterhin ist es besonders vorteilhaft, wenn der Fußbereich der Nut abgerundet ist. Hierdurch wird ein Rissfortschritt, ausgehend von der sehr schmalen Nut, vermieden. Die Abrundung kann beispielsweise in Form einer Mikrobohrung erfolgen, welche eine Rissinitiierung verhindert.

Erfindungsgemäß wird somit das unkontrollierte Auftreten von Rissen, bedingt durch thermische Spannungen, vermieden. Da sich die Rissbildung in der Dichtlippe in der Praxis nicht nur durch den Dichtungsring, sondern auch durch die Turbinenscheibe fortsetzen kann, erfolgt somit auch eine direkte Erhöhung der Lebensdauer der Turbinenscheibe. Somit wird auch die Ausschussrate an Turbinenscheiben erheblich gesenkt, wodurch sich eine Reduzierung von Ersatzteilkosten und Überholungskosten des Gesamttriebwerks ergibt. Ein weiterer Vorteil besteht auch darin, dass es nicht mehr erforderlich ist, beschädigte Dichtungslippen bei der Überholung eines Triebwerks auszubessern oder neu aufzubauen.

Ein weiterer Vorteil der Erfindung liegt darin, dass auf eine Beschichtung der Dichtlippen verzichtet werden kann. Auch diese reduziert die Herstellungskosten.

Durch die insgesamt reduzierte Gefahr einer Rissbildung wird auch die Gefahr verringert, dass undetektierbare Risse vorliegen, welche bei einer Inspektion im Rahmen einer Triebwerksüberholung übersehen werden.

Im Folgenden wird die Erfindung anhand eines Ausführungsbeispiels in Verbindung mit der Zeichnung beschrieben. Dabei zeigt:
- Fig. 1: eine schematische Seitenansicht einer Dichtungsanordnung gemäß dem Stand der Technik,
- Fig. 2: eine weitere Ansicht, ähnlich Fig. 1, einer aus dem Stand der Technik bekannten Dichtungsanordnung, und
- Fig. 3: eine perspektivische Teilansicht eines erfindungsgemäßen Labyrinthdichtungsrings.

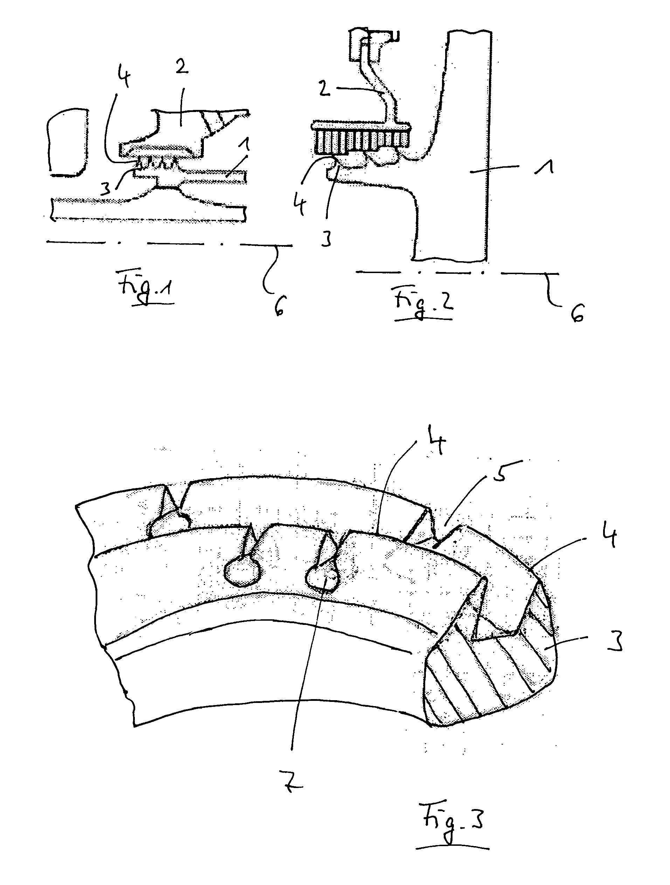

Erfindungsgemäß ist vorgesehen, dass an einer Turbinenscheibe 1 ein Ringelement 3 angeordnet ist, welches zumindest eine Dichtlippe 4 aufweist, welche mit einem Statorbauelement 2 zusammenwirkt und eine Labyrinthdichtung bildet, so wie dies in den Fig. 1 und 2 beschrieben ist. Eine Drehung oder Relativbewegung zwischen dem Statorbauelement 2 und der Dichtlippe 4 erfolgt um eine nur schematisch dargestellte Achse 6.

Die Fig. 3 zeigt in schematischer, perspektivischer Teilansicht ein Ringelement 3 eines erfindungsgemäßen Labyrinthdichtungsrings, an welchem zwei Dichtlippen 4 ausgebildet sind.

In Umfangsrichtung verteilt sind an den Dichtlippen 4 jeweils Nuten 5 ausgebildet. Diese sind in der Darstellung der Fig. 3 der besseren Darstellung halber stark verbreitert dargestellt. In der Realität handelt es sich um Mikroschlitze, die beispielsweise zwischen 50 µm und 300 µm breit sind (in Umfangsrichtung).

Die Höhe der Nuten 5 beträgt im Wesentlichen die ganze radiale Höhe der Dichtlippe 4. Am Fußbereich 7 ist eine Abrundung oder Bohrung vorgesehen, um einen Rissfortschritt in dem Grundmaterial des Ringelements 3 und somit in der Turbinenscheibe 1 zu vermeiden.

Die Fig. 3 zeigt bereits verschiedene Varianten der Verteilung der Nuten 5 am Umfang der Dichtlippe 4. Diese können am Umfang gleichmäßig verteilt sein, es ist jedoch auch möglich, einzelne Gruppen zu bilden oder weitere Aufteilungen vorzunehmen.

Erfindungsgemäß ist es weiterhin möglich, die Nuten 5 entweder parallel zur Maschinenachse 6 anzuordnen, d.h., in einer Ebene, welche die Maschinenachse 6 umfasst. Es ist jedoch auch möglich, die Nuten zu dieser Ebene zu neigen und somit schräg anzuordnen, um dadurch die Luftströmung durch die Dichtung zu reduzieren, indem das Druckverhältnis erhöht und damit weniger Zapfluft benötigt und infolge dessen die Triebwerksleistung erhöht wird.

Die Nuten am Umfang der Dichtlippe und deren Höhe können sowohl gleichmäßig als auch unterschiedlich angeordnet sein. Weiterhin können sich erfindungsgemäß unterschiedliche Querschnittsformen der Dichtlippen 4 ergeben, welche dem jeweiligen Anwendungszweck angepasst sind.

### Bezugszeichenliste

- 1: Turbinenscheibe
- 2: Statorbauelement
- 3: Ringelement
- 4: Dichtlippe
- 5: Nut
- 6: Achse / Maschinenachse / zentrische Achse
- 7: Fußbereich

## Patentansprüche

1. Labyrinthdichtungsring für eine Labyrinthdichtung einer Turbinenscheibe (1) einer Gasturbine, mit einem metallischen Ringelement (3) mit zumindest einer ringförmigen Dichtlippe (4), **dadurch gekennzeichnet, dass** die Dichtlippe (4) an ihrem Umfang mit zumindest einer im Wesentlichen radial angeordneten Nut (5) versehen ist.

2. Dichtungsring nach Anspruch 1, **dadurch gekennzeichnet, dass** die Nut (5) parallel zur zentrischen Achse (6) des Dichtungsrings angeordnet ist.

3. Dichtungsring nach Anspruch 1 oder 2, **dadurch gekennzeichnet, dass** die Nut (5) schlitzartig ausgebildet ist.

4. Dichtungsring nach einem der Ansprüche 1 bis 3, **dadurch gekennzeichnet, dass** die Nut sich im Wesentlichen über die gesamte Höhe der Dichtlippe (4) erstreckt.

5. Dichtungsring nach einem der Ansprüche 1 bis 4, **dadurch gekennzeichnet, dass** die Nut (5) eine Breite in Umfangsrichtung zwischen 50 µm und 300 µm aufweist.

6. Dichtungsring nach einem der Ansprüche 1 bis 5, **dadurch gekennzeichnet, dass** am Fußbereich (7) der Nut (5) eine Abrundung des Nutquerschnitts ausgebildet ist.

7. Dichtungsring nach Anspruch 6, **dadurch gekennzeichnet, dass** die Abrundung in Form einer Bohrung ausgebildet ist.
